# EUROPEAN PATENT APPLICATION

(11) **EP 3 654 099 A2**
(43) Date of publication of application: **20.05.2020**
(21) Application number: 18824054.3
(22) Date of filing: 26.06.2018
(51) Int. Cl.: G03B 21/00

(54) **METHOD FOR PROJECTING IMMERSIVE AUDIOVISUAL CONTENT**

(30) Priority: 27.06.2017 ES 201730841
(71) Applicant: Broomx Technologies, S.L., 08005 Barcelona (ES)
(72) Inventor: SERRANO VERGARA, Diego, 08005 Barcelona (ES); SERRANO VERGARA, Pedro, 08005 Barcelona (ES)
(74) Representative: Herrero & Asociados, S.L.
(86) International application number: PCT/ES2018/070456
(87) International publication number: WO 2019/002652

(57) **Abstract**

The method for projecting immersive audiovisual content comprises a cropping step (2) wherein a digital image is cropped (1), selecting its size; and also comprises correcting (3) the optical distortion of said digital image (1) for the projection thereof.

It enables a method for projecting immersive-type optimised audiovisual content in real spaces, for a user or group of users.

## Description

### DESCRIPTION

The present invention relates to a method for projecting immersive audiovisual content in real spaces, which makes it possible to offer comprehensive visual coverage in the audiovisual content space.

### Background of the invention

Immersive content or video, also called spherical or 360-degree video, is known in the simulation of fictitious actions and spaces (immersive technology) in the real world. Normally, these videos reproduce a panoramic view of a scenario, which may be real, which is achieved by capturing the view of a scenario in every possible direction simultaneously using an omnidirectional camera or a collection of cameras, or virtual, which is achieved using 3D creation software. Immersive content is used increasingly in marketing, advertising, education or leisure in general to attract more consumers and "hook" them by allowing them to "experience" the sensations of the products and services. It is also used in musical shows, theatre, concerts, etc., to reach a wider audience without need to be present at the event, in the recreational videogames sector and in the education sector.

In addition to capturing 360-degree video, immersive content production techniques require specific post-production and three-dimensional animation software, requiring computer applications that will enable the projection of different images: equirectangular, cylindrical, stereographic, fisheye, cubic projection mapping, etc.

There are currently many companies working on the creation of 360-degree audiovisual content which actively develop this type of content, and other companies such as YouTube or FaceBook which develop online platforms on which to store and reproduce it in a browser. However, despite the fact that this content is booming, there is an imbalance between immersive content production techniques and immersive content reproduction techniques.

A known immersive content reproduction technique is that used in Domes or Planetariums, but it is a very expensive technique, due to which it is only applied in exceptional events and is not viable for individual use.

To date, the most widespread personal immersive content reproduction technique is the use of virtual reality (VR) glasses and tablet or mobile browsers. However, these glasses only allow the person wearing them to enjoy the content, isolating them from their real environment, and are also uncomfortable, which conditions the duration of the content.

A current solution is that envisaged in document WO 2012/118769, which describes a videogame image projection environment that surrounds the user/player to provide them with an individual immersive experience. To this end, the system has various displays, conventional 2D image displays such as a TV plasma screen and 3D displays, including a RGB display that provides a peripheral image around this display. However, document WO 2012/118769 does not describe the technical means whereby this display, called "environmental" in document WO 2012/118769, provides this 360-degree projection. Furthermore, document WO 2012/118769 indicates that, in order for the user to obtain the immersive 3D experience within that image projection, they must wear a device (headset or glasses) configured to operate in synchronisation with all the displays that compose that system. The system of document WO 2012/118769 also needs to be synchronised with the user's movements in order to apply them in an environment of players that interact with the images of the videogame, which restricts both the format of the audiovisual content displayed and the user's role in this immersive experience, where they play an active role that requires the system to have techniques such as head tracking, in the optimal position area.

However, none of these solutions project immersive content using a single display.

Therefore, the target technical problem raised is to provide a method for projecting immersive-type optimised audiovisual content in real spaces, for a user or a group of users.

### Description of the invention

The present invention serves to solve the aforementioned problem, resolving the drawbacks of the solutions commented in the state of the art.

The present invention relates to a method for projecting immersive content, comprising:
- cropping a digital image, for example, immersive, selecting its size; and characterised in that it also comprises correcting optical distortion, such as the geometric distortion generated by a fisheye-type optical-physical module of said digital image for the projection thereof.

The method for projecting immersive content in accordance with the present invention can also comprise the correction step for correcting the digital image in accordance with the space where said digital image is projected, wherein said correction step for correcting the digital image in accordance with the space where it is projected comprises correcting the digital image in accordance with the geometry and/or with the colour of said space.

Advantageously, said correction step is performed using optical distortion data from the display lens through which said digital image is projected, and can be performed by means of reverse deformation to the deformation generated by the physical lens.

Additionally, said correction step for correcting the digital image in accordance with the space where it is projected is performed using an infrared depth-sensing camera or using software.

Advantageously, said initial digital image is an equirectangular image.

Additionally, said correction step for correcting the digital image in accordance with the space where it is projected is performed using colour and depth-sensing cameras integrated in the display or external to the display, or using software.

The projection method in accordance with the present invention makes it possible to project an image optimised for the projection thereof in a space, for example, a closed or irregular space.

It should be noted that the present invention is preferably applied in a closed space.

### Brief description of the figures

What follows is a description of drawings that help to better understand the invention and which are explicitly related to an embodiment of said invention which is presented as a non-limiting example thereof.

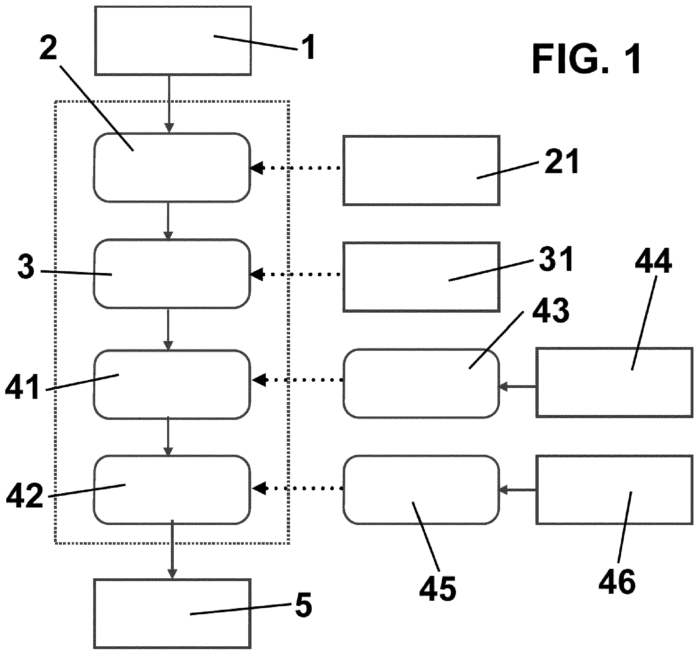

FIGURE 1. Shows a block diagram of the audiovisual content projection method in accordance with the present invention.

### Preferred embodiment of the invention

The method of the present invention is used to project immersive audiovisual content optimised for the projection thereof in a space, for example, a room.

The method of the present invention is performed on a digital image 1 that represents a three-dimensional environment in two dimensions. For example, this digital image 1 is preferably an equirectangular image which is an industry standard.

The method in accordance with the present invention comprises a cropping step 2 wherein said digital image is cropped 1, i.e. selecting its size and coordinates. This cropping step wherein the digital image is cropped can be performed using the three-dimensional virtual browsing data of a user control device 21, for example, a personal smart phone, an application or a website that includes a spatial browsing interface, although it is not excluded that it will be performed using data sent by other control devices or a combination of console game controller, gestural interaction sensors, etc.

This control device 21 sends coordinates (series of instructions) for cropping (select a portion of the digital image to be displayed) to a central unit.

Next, in the method in accordance with the present invention a correction step 3 wherein optical distortion is corrected to prevent distortions of the digital image when projected, for example, on the walls of a room.

This correction step 3 is performed using the data from the lens 31 through which the digital image will be projected and using software. It should be noted that the lens data are provided by the lens manufacturers themselves, as known to the persons skilled in the art.

The correction is performed by means of reverse deformation to correct the deformation generated by the physical lens 31.

In this manner, a corrected digital image is obtained optimised for the projection thereof in a real environment, for example, on the walls of a room.

It should be noted that the previously described steps are advantageously executed in real time.

If desired, the method in accordance with the invention may also comprise a step 41, 42 of correcting the digital image 1 in accordance with the space where said digital image is projected.

In this correction step, the digital image can be corrected 41 in accordance with the geometry of the space where the image is projected, for example, a room, which consists of adapting the digital image projected to the geometry of the projection space using a formatted depth image 43 of the space generated from a raw depth image 44.

Additionally, in the correction step the correction 42 of the digital image in accordance with the colorimetry of this space can also be performed, i.e. adapt the projected digital image to the colorimetry of the projection space using the colour image formatted 45 by said space from a raw colour image 46.

In this correction step, the geometric and chromatic description data of the projection space are firstly collected in order to perform the correction steps 41, 42 wherein real-time image processing is corrected.

It should be noted that this correction step 41, 42 is preferably performed in real time, although the collection of the necessary data (depth and colour images of the space) to perform this step is not performed in real time, but rather can be performed previously.

Depth and colour images can be obtained in any of the following manners:
- depth and colour cameras integrated in the display body;
- external cameras: display accessory for use by the technician or user; or
- any other technique that provides the same results: formatted depth image and colour image.

For example, colour and depth sensors integrated in the projection unit or external to the projection unit can be used.

In this case, raw data can be collected from the depth sensors and from the colour sensors, the raw data can be formatted to extract the relevant data and real-time data can be provided to the previously described steps of the method in accordance with the present invention.

Lastly, the corrected digital image 5, optimised for the projection space, is projected.

Despite the fact that reference has been made to a specific embodiment of the invention, it is evident for a person skilled in the art that the described method is susceptible of many variations and modifications, and that all the aforementioned details can be replaced by other, technically equivalent ones without detracting from the scope of protection defined by the attached claims.

## Claims

1. A method for projecting immersive content, comprising:
- cropping (2) a digital image (1), selecting its size;
**characterised in that** it also comprises correcting (3) the optical distortion of said digital image (1) for its projection.

2. The method for projecting immersive content, according to claim 1, which also comprises a correction step (41, 42) wherein the digital image is corrected (1) in accordance with the space where said digital image is projected (1).

3. The method for projecting immersive content, according to claim 2, wherein said correction step wherein the digital image is corrected (1) in accordance with the space where it is projected comprises correcting the digital image (1) in accordance with the geometry (41) and/or the colour (42) of said space.

4. The method for projecting immersive content, according to claim 1, wherein said correction step (3) is performed using optical distortion data from the display lens (31) through which said digital image (1) will be projected.

5. The method for projecting immersive content, according to claim 4, wherein said correction step (3) is performed by means of reverse deformation to the deformation generated by the lens (31).

6. The method for projecting immersive content, according to claim 4 or 5, wherein said lens (31) is a fisheye lens.

7. The method for projecting immersive content, according to claim 1, wherein said correction step (41, 42) wherein the digital image is corrected (1) in accordance with the space where it is projected is performed using an infrared depth camera or using software.

8. The method for projecting immersive content, according to claim 1, wherein said digital image (1) is an equirectangular image.

9. The method for projecting immersive content, according to claim 2, wherein said correction step (41, 42) wherein the digital image is corrected (1) in accordance with the space where it is projected is performed using colour and depth sensors integrated in the display or external to the display.
